**Europäisches Patentamt**

**European Patent Office**

**Office européen des brevets**

(19)

(11) Veröffentlichungsnummer: **0 200 925**
**B1**

(12) # EUROPÄISCHE PATENTSCHRIFT

(45) Veröffentlichungstag der Patentschrift:
**28.12.88**

(21) Anmeldenummer: **86104576.3**

(22) Anmeldetag: **03.04.86**

(51) Int. Cl.⁴: **F 16 K 31/06,** F 16 K 31/126,
F 16 K 31/365

(54) **Stellmotor.**

(30) Priorität: **13.04.85 DE 3513282**

(43) Veröffentlichungstag der Anmeldung:
**12.11.86 Patentblatt 86/46**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
EP-A- 0 058 741
AT-A- 296 708
AT-E- 51 517
DD-A- 47 225
DE-B- 1 750 118
DE-B- 2 606 167
GB-A- 1 449 619
US-A- 3 159 774
US-A- 3 606 241
US-A- 3 774 637
US-A- 3 777 778
US-A- 3 913 884
US-A- 4 270 726
US-A- 4 295 631

(73) Patentinhaber: **Programmelectronic Engineering AG,
Weidenstrasse 50, CH-4143 Dornach (CH)**

(72) Erfinder: **Profos, Paul, Prof. Dr. Ing., Büelweg 11,
CH-8400 Winterthur (CH)**

(74) Vertreter: **Troesch, Hans Alfred, Dr. Ing. et al,
Walchestrasse 19, CH-8035 Zürich (CH)**

(56) Entgegenhaltungen: (Fortsetzung)
**ROHRLEITUNGEN UND ROHRLEITUNGSARMATUREN
von Dr. Ing. Johannes Neukirchner et al., 3. Auflage,
1972. VEB FACHBUCHVERLAG, Leipzig 2.2.5.4
Elektromagnetische Antriebe, Seiten 193-195 und
2.4.2.2 Regler mit Hilfsenergie, Seiten 219-221
ELEKTROMAGNETE IN STELLMOTOREN FÜR
PROPORTIONALVENTILE. K. SOPHA, O+P:
"Oelhydraulik und Pneumatik", 21, 1977, Seiten 722-729**

## Beschreibung

Die vorliegende Erfindung betrifft einen Stellmotor mit einem gegen die Kraft einer Druckfeder mittels einer Stellkraft verschieblichen Stellglied.

Aus der DE-B-1750118 ist ein Stellmotor der genannten Art bekannt.

In Steuer- oder Regelsystemen, in welchen mittels einer Stellgrösse über ein Stellglied auf einen Stellstrom, wie die Durchflussmenge eines flüssigen oder gasförmigen Mediums eingegriffen wird, ist es oft erforderlich, den Stellstrom nicht nur lediglich in Abhängigkeit von einer Stellgrösse über das Stellglied anzusteuern, sondern zusätzlich in Abhängigkeit von einer weiteren Einflussgrösse. Da üblicherweise Stellmotoren, wie der aus der DE-B-1750118 bekannte, lediglich einen Eingang für eine steuernde Grösse umfassen, und eine Signalüberlagerung auf das Stellgrössensignal oft sehr aufwendig ist, wird die notwendige Überlagerung üblicherweise dann durch Serieschaltung zweier Stellglieder bzw. Stellmotoren im Stellstrom vorgenommen. Dies trifft insbesondere zu, wenn das Stellglied durch eine pneumatische oder hydraulische Stellkraft gestellt wird.

Aus der EP-A-0058741 ist im weiteren ein Stellmotor bekannt, bei welchem die Stellkraft mit einer Elektromagnetanordnung erzeugt wird und eine Reglermembran vorgesehen ist, durch welche der mit der Elektromagnetanordnung eingestellte Stellgliedhub in regelndem Sinne verändert wird.

Ausgehend vom Stellmotor erstgenannter Art stellt sich die vorliegende Erfindung die Aufgabe, einen Stellmotor zu schaffen, an welchem eine Stellgrössenüberlagerung mit einfachsten Mitteln erfolgt.

Zu diesem Zweck zeichnet sich die vorliegende Erfindung nach dem Wortlaut des kennzeichnenden Teils von Anspruch 1 aus.

Es wird dabei ausgenützt, dass die aus dem Stande der Technik als Stellkraft eingesetzte elektromagnetisch erzeugte Kraft sich erfindungsgemäss als Korrekturkraft einer ersten Stellkraft überlagern lässt, unabhängig davon, wie diese erste Stellkraft erzeugt wird, beispielsweise und insbesondere hydraulisch bzw. pneumatisch.

Um nun zu vermeiden, dass an einem bestehenden Steuer- oder Regelsystem durch den erwähnten Stellmotor mit der Korrektureingriffsmöglichkeit eine zusätzliche Fehlerquelle eingeführt wird, indem bei fehlerhaftem Funktionieren der korrekturkrafterzeugenden Elektromagnetanordnung und an sich richtigem Funktionieren des übrigen Stellmotors, in Abhängigkeit der Stellkraft, das Gesamtsystem beeinträchtigt wird, wird der Stellmotor nach dem Wortlaut des Anspruchs 2 ausgebildet.

Dadurch wird erreicht, dass der Stellmotor bei Erregerstromunterbrechung der Elektromagnetanordnung gleich wirkt, wie wenn an ihm lediglich die erste Stellkraft wirken würde.

Das Merkmal, dass die Korrekturkraft wahlweise in beide Hubrichtungen auf das Stellglied wirken kann, wird auf höchst einfache Art und Weise durch Ausbildung des Stellmotors nach dem Wortlaut des Anspruchs 3 realisiert.

Je nach Einsatzzweck wird dabei der Stellmotor mit einer, wie in Anspruch 4 spezifizierten Elektromagnetanordnung realisiert.

Die Erfindung wird anschliessend beispielsweise anhand von Figuren erläutert.

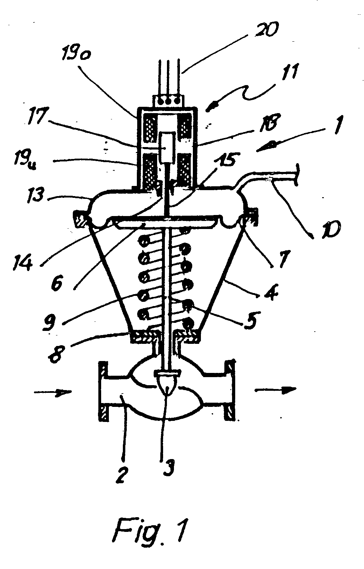

Es zeigen: Fig. 1 einen schematischen Längsschnitt durch einen Stellmotor, bestehend aus einem pneumatischen Stellmotor mit Ventil und einer Elektromagneteinrichtung,

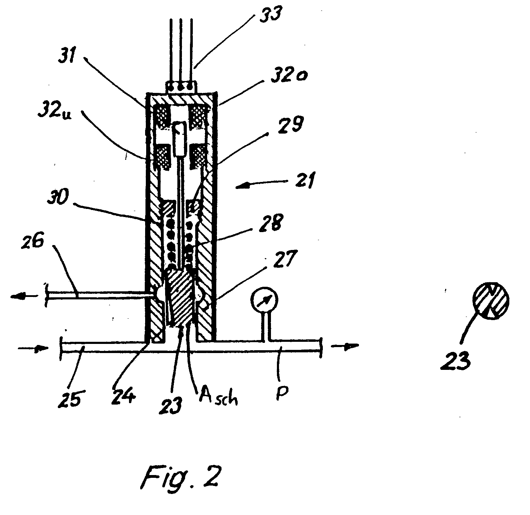

Fig. 2. einen schematischen Längsschnitt durch ein Druckregulierventil als Stellmotor, mit einer Elektromagnetanordnung.

Gemäss Figur 1 umfasst der Stellmotor 1 ein pneumatisch betätigtes Ventil, welches auf eine Fluidleitung 2 wirkt. Das Ventil umfasst in herkömmlicher Art und Weise einen Ventilkörper 3, ein Ventilgehäuse 4, in welches eine Ventilstange 5 einragt. Dem Ventilkörper 3 an der Ventilstange 5 gegenüberliegend, stützt sich letztere mit einem Abstützteller 6 an einer, das Ventilgehäuse 4 zweiteilenden Membrane 7 ab, wobei zwischen Teller 6 und einer ventilkörperseitigen Gehäuseschulter 8 eine Druckfeder 9 vorgesehen ist, die den Ventilkörper 3 in geöffnete Position treibt. Oberhalb der Membran 7 mündet eine Stelldruckleitung 10 in das Ventilgehäuse 4 ein, so dass die durch den Stelldruck in Leitung 10 auf die Membrane 7 bzw. den Teller 6 wirkende Stellkraft das Ventil stellt. Der Ventilkörper wird somit in Funktion der Stellkraft und damit in Funktion des Stelldruckes in Leitung 10 eingestellt. Eine Elektromagnetanordnung 11 ist koaxial zur Ventilstange 5 am Ventilgehäuse 4 angeordnet und kann darauf aufgeschraubt werden. Der Deckel 13 des Ventilgehäuses weist ein Zentrumsloch 14 auf, durch welches eine Verlängerung 15 der Ventilstange 15 durchragt. Endständig ist an der Verlängerung 15 ein Anker 17, wie aus Eisen, befestigt. Das büchsenförmige Zusatzeinrichtungsgehäuse 18, koaxial zur Verlängerung 15 angeordnet, trägt an seiner Innenwandung zwei Ringwicklungen $19_o$ bzw. $19_u$, wodurch der Anker 17 läuft. Durch selektive Erregung der Wicklungen $19_o$ bzw. $19_u$ über Erregerstromleitungen 20 wird der Anker 17 mit stromabhängiger Kraft gegen den Ventilkörper 3 oder von diesem weg getrieben. Somit überlagert sich die Kraft, gesteuert durch die Erregerströme, als Zusatzstellgrösse der Kraft des Stelldruckes in Leitung 10 mit Bezug auf die Feder 9 und es wird möglich, um den mit dem Stelldruck eingestellten Arbeitspunkt des Ventilkörpers herum, den Ventilhub vor- oder rückzustellen. Fällt der Erregerstrom aus, so ist anzustreben, dass der Ventilkörper in die durch den Stelldruck allein definierte Lage vor- oder rückläuft. Dies wird dadurch erreicht, dass die Wicklungen $19_o$ und $19_u$ so betrieben werden, dass die auf den Anker wirkende Kraft wenigstens nahezu Null wird, wenn der Erregerstrom ausfällt, was in einfacher Weise dadurch erreicht wird, dass die eine Spulen-Ankeranordnung als Zuganordnung wirkt, die andere als Druckanordnung, d.h. der Erregerstrom der einen Spulenanordnung Null ist, wenn die andere Spulenanordnung betrieben wird und umgekehrt.

Figur 2 zeigt ein Druckregulierventil als Stellmotor 21. Ein Kolben 23, versehen mit einer konischen Regulierkerbe 24 steuert mit seiner Position, den Durchlassquerschnitt zwischen einer Fluidleitung 25, worin der Druck zu regulieren ist und einer Rücklaufleitung 26. Auf bekannte Art und Weise, in einem Ventilgehäuse 27 geführt, arbeitet der Ventilkörper 23 gegen eine Feder 28, die sich an einer Ringschulter 29 am Ventilgehäuse 27 abstützt. Eine Ventilstange 30 ist nach oben durch die Ringschulter 29 durchgeführt und trägt wiederum einen Anker, zB. aus Eisen. Wie bereits in Figur 1 dargestellt, liegt der Anker 31 in Ruhestellung symmetrisch zwischen zwei Wicklungen $32_o$ und $32_u$ der Elektromagnetanordnung, wobei die Wicklungen als Ringwicklungen an der Innenwandung des nach oben verlängerten Ventilgehäuses 27 angebracht sind. Durch Beaufschlagung mit Erregerstrom an Anschlüssen 33 wird der Anker 31 entweder nach oben durch die Wicklung $32_o$ oder nach unten durch Wirkung der Wicklung $32_u$ angezogen, womit sich, wie bereits anhand der Figur 1 erläutert, via Ventilstange 32 auf den Ventilkörper 23 eine Korrekturkraft ergibt. Die Stellkraft ist in diesem Beispiel das Produkt aus Druck P in Leitung 25 und Querschnittsfläche $A_{sch}$ des Kolbens 23. Auch hier kann der Stellmotor als Ganzes mit der Elektromagnetanordnung ausgebildet sein oder aber aus einem Stellmotor und separat aufgebrachter Elektromagnetanordnung bestehen.

Selbstverständlich kann anstelle der an den Beispielen dargestellten Elektromagnetanordnung auch eine andere, wie ein Linear- oder Torque-Elektromotor, beispielsweise ein Gleichstrommotor, vorgesehen werden, die jeweils am Stellglied, d.h. den Ventilkörpern 3 oder 23 an den speziellen Beispielen, gefesselt ist.

Mit der vorgeschlagenen Anordnung wird es auf höchst einfache und preisgünstige Art und Weise möglich, einen bekannten Stellmotor mit Vorkehrungen für eine Eingangsstellgrösse derart zu erweitern, dass er die Steuerwirkung von zwei und mehr Stellgrössen überlagert, mehr deshalb, weil das dargestellte Prinzip sich ohne weiteres auf drei und mehr Eingangsstellgrössen erweitern lässt.

## Patentansprüche

1. Stellmotor mit einem gegen die Kraft einer Druckfeder (9, 28) mittels einer ersten Stellkraft verschieblichen Stellglied (3, 23), dadurch gekennzeichnet, dass das Stellglied (3, 23) zusätzlich mit einer Elektromagnetanordnung (17, 19, 31, 32) verbunden ist und zusätzlich zur ersten Stellkraft von der Elektromagnetanordnung (17, 19, 31, 32) eine wahlweise in beide Hubrichtungen des Stellgliedes (3, 23) wirkende Korrekturkraft zu dessen Verschiebung auf das Stellglied (3, 23) wirkt.

2. Stellmotor nach Anspruch 1, dadurch gekennzeichnet, dass bei Erregerstromunterbrechung der Elektromagnetanordnung (17, 19, 31, 32) das Stellglied (3, 23) in denjenigen Zustand überführt wird, den es an sich ohne Vorhandensein der Elektromagnetanordnung (17, 19, 31, 32) einnehmen würde.

3. Stellmotor nach Anspruch 1, dadurch gekennzeichnet, dass die Elektromagnetanordnung (17, 19, 31, 32) in entgegengesetzter Richtung auf den Anker (17, 31) wirkende Elektromagnete (19, 32) umfasst).

4. Stellmotor nach Anspruch 1, dadurch gekennzerichnet, dass die Elektromagnetanordnung (17, 19, 31, 32) mindestens einen am Stellglied gefesselten bzw. fesselbaren, reversierbaren Linear- oder Torque-Elektromotor umfasst.

5. Stellmotor nach Anspruch 1, dadurch gekennzeichnet, dass die erste Stellkraft eine hydraulische oder pneumatische Stellkraft ist.

## Claims

Servomotor having a final control element (3, 23) which can be displaced against the force of a compression spring (9, 28) by means of a first actuating force, characterized in that the final control element (3, 23) is additionally connected to an electromagnet arrangement (17, 19, 31, 32) and, in addition to the first actuating force, from the electromagnet arrangement (17, 19, 31, 32) there acts on the final control element (3, 23) a correcting force for the displacement of the latter, by choice acting in both directions of travel of the final control element (3, 23).

2. Servomotor according to claim 1, characterized in that, in the event of an interruption in the excitation current of the electromagnet arrangement (17, 19, 31, 32), the final control element (3, 23) is brought into the state which it would adopt without the existence of the electromagnet arrangement (17, 19, 31, 32).

3. Servomotor according to claim 1, characterized in that the electromagnet arrangement (17, 19, 31, 32) comprises electromagnets (19, 32) acting in opposite direction on the armature (17, 31).

4. Servomotor according to claim 1, characterized in that the electromagnet arrangement (17, 19, 31, 32) comprises at least one reversible linear or torque electric motor shackled or capable of being shackled to the final control element.

5. Servomotor according to claim 1, characterized in that the first actuating force is a hydraulic or pneumatic actuating force.

## Revendications

1. Servomoteur comprenant un organe final (3, 23) déplaçable sous l'action d'une première force d'asservissement à l'encontre de l'action d'un ressort de compression (9, 28) caractérisé en ce que l'organe final (3, 23) est lié en outre à un dispositif électromagnétique (17, 19, 31, 32) et que, en plus de la première force d'asservisssement, un force correctrice exercée par le dispositif électromagnétique (17, 19, 31, 32) agit sur l'organe final (3, 23), par choix dans les deux sens de la course de l'organe final (3, 23), pour déplacer cet organe.

2. Servomoteur selon la revendication 1, caractérisé en ce que, en cas d'interruption du courant excitateur du dispositif électromagnétique (17, 19, 31, 32), l'organe final (3, 23) est placé dans l'état qu'il prendrait en l'absence du dispositif électromagnétique (17, 19, 31, 32).

3. Servomoteur selon la revendication 1, caractérisé en ce que le dispositif électromagnétique (17, 19, 31, 32) comprend des électro-aimants (19, 32) agissant en sens inverse sur l'armature (17, 31).

4. Servomoteur selon la revendication 1, caractérisé en ce que le dispositif électromagnétique (17, 19, 31, 32) comprend au moins un moteur électrique linéaire réversible ou un moteur couple électrique réversible, lié ou pouvant être lié à l'organe final.

5. Servomoteur selon la revendication 1, caractérisé en ce que la première force d'asservissement est une force d'asservissement hydraulique ou pneumatique.

Fig. 1

Fig. 2